(19) Europäisches Patentamt
European Patent Office
Office européen des brevets

(11) EP 3 597 597 A1

(12) **EUROPEAN PATENT APPLICATION**

(43) Date of publication:
**22.01.2020 Bulletin 2020/04**

(21) Application number: **18305965.8**

(22) Date of filing: **17.07.2018**

(51) Int Cl.:
*C01B 32/907* (2017.01) *H01M 4/136* (2010.01)
*H01M 4/36* (2006.01) *H01M 4/58* (2010.01)
*H01M 10/0525* (2010.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **Commissariat à l'Energie Atomique et aux Energies Alternatives**
**75015 Paris (FR)**
- **JNC Corporation**
**Chiyoda-ku**
**Tokyo 100-8105 (JP)**

(72) Inventors:
- **HAON, Cédric**
**38054 GRENOBLE CEDEX 9 (FR)**
- **KEIICHIRO, Kanao**
**TOKYO, 100-8105 (JP)**
- **LAUNOIS, Sébastien**
**38054 GRENOBLE CEDEX 9 (FR)**
- **TETSURO, Kizaki**
**CHIBA CHIBA, 290-8551 (JP)**
- **YOSHIHITO, Takano**
**CHIBA CHIBA, 290-8551 (JP)**

(74) Representative: **Nony**
**11 rue Saint-Georges**
**75009 Paris (FR)**

(54) **SPHERICAL SIOC PARTICULATE ELECTRODE MATERIAL**

(57) The present invention relates to the use, as an electrode active material, of a particulate material comprising spherical silicon oxycarbide (SiOC) particles, said SiOC particles having an average particle size ranging from 0.1 to 100 μm; a sphericity ranging from 0.95 to 1.0; and a total content in carbon (C), silicon (Si) and oxygen (O) equal or greater than 98 wt%, with Si ranging from 20 to 50 wt%, C from 10 to 50 wt% and O from 20 to 50 wt%, and to a method for producing said particulate material.

It also relates to an electrode active material, an electrode and a battery, especially a lithium-ion battery, including the aforementioned particulate material.

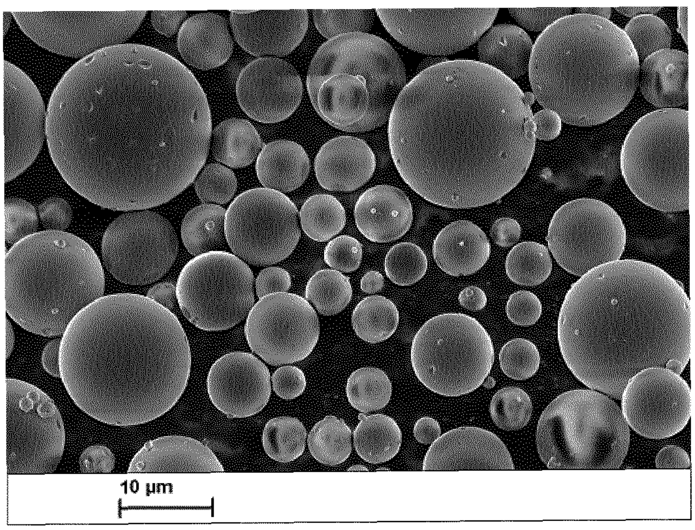


**FIGURE 1**

EP 3 597 597 A1

## Description

The present invention relates to the field of batteries, especially of lithium-ion batteries, and more particularly is directed to a new electrode active material for manufacturing electrodes, in particular negative electrodes, particularly interesting for increasing the performances of Li-ion batteries.

Lithium-ion batteries are widely used as electric sources for example for lap top computers, cellular phones and camcorders. Rechargeable lithium ion batteries have a simple mechanism. During charge, lithium ions are extracted from the cathode and inserted as lithium into the anode. On discharge, the reverse process occurs. The electrodes used in these batteries are very important and can have dramatic effects on the batteries performance.

The most common anode materials to date have been carbonaceous compounds such as graphite. Unfortunately, conventional graphite anode material faces limitation due to low theoretical specific capacity of 372 $mAh.g^{-1}$.

Yet, cells with larger capacities are often required for high energy applications of Li-ion batteries.

In order to improve the capacity of the batteries, studies have been conducted to replace graphite anode material in Li-ion batteries. In this respect, silicon has showed promising results thanks to its very high theoretical capacity (3579 $mAh.g^{-1}$). However, lithium insertion into bulk silicon material causes large volume expansion leading to fast loss of performance upon charge/discharge cycling.

Among several alternatives, silicon oxycarbide (Si-O-C) materials can be of great interest and various works about synthesis of such materials have been reported in the literature.

For example, Fukui *et al.* [1] proposed to prepare SiOC material for anode application from the pyrolysis of polysilane material $(Ph_2Si)_{0.85}(PhSi)_{0.15}$. They also studied the result of pyrolysing a mixture of polysilane starting material with polystyrene, and showed that it leads to the formation of a Si-O-C composite containing electrochemically active free carbon and having microporosity that enables better electrochemical performance than the one obtained from pure polysilane. This material thus offers a first lithiation capacity of about 850 $mAh.g^{-1}$ and a first coulombic efficiency of 70%. The influence of phenyl substituents in polysilane precursors on SiOC microstructure [2], or of pyrolysis temperature on lithium storage performance of SiOC material ([3], [4]) has also been investigated. It has been shown that a material prepared by pyrolysing at 700°C displays improved performance with an average capacity of around 450 $mAh.g^{-1}$, whereas high pyrolysis temperatures lead to the formation of inactive crystalline SiC phase and increased carbon organization providing less Li-ion storing sites, thus to degraded electrochemical performance. Mention may also be made of document EP 2 104 164 relating to the aforementioned studies that reports the production of a porous silicon oxycarbide material by carbonizing both a silicon metal or a silicon-containing compound such as polysilane, and an organic compound containing no silicon atoms and having a softening point or a melting point, in an inert gas or in a vacuum at a temperature ranging from 300 to 1,500°C, for example polystyrene.

Following a similar approach, Dahn et al. (EP 0 867 958) propose silicon oxycarbide electrode materials for lithium ion batteries produced from the pyrolysis of a silicon-containing preceramic polymer. The obtained SiOC material is thereafter treated with a strong acid or a strong base to reduce the Si and O contents as well as increase the surface area and open porosity.

However, the currently proposed silicon oxycarbide materials display insufficient electrochemical performances in practical use for the desired high energy Li-ion battery.

Consequently, there remains a need to produce silicon-based materials for electrodes, in particular for lithium-ion battery anode, capable of insuring high capacity and long-time stability upon cycling.

The present invention is targeted specifically at providing a new electrode active material that satisfies the aforementioned requirements, and in particular which makes it possible to produce an electrode with increased reversible volumetric capacity.

More specifically, the inventors have discovered that it is possible to significantly increase the electrode density, and thus the reversible volumetric capacity, of the electrode, in particular for a Li-ion battery, by using as electrode active material, silicon oxycarbide particles of controlled morphology, especially of controlled shape and size.

Thus, the present invention relates, according to a first of its aspects, to the use, as an electrode active material, of a particulate material comprising spherical silicon oxycarbide (SiOC) particles, said SiOC particles having:

- an average particle size ranging from 0.1 to 100 μm;
- a sphericity ranging from 0.95 to 1.0; and
- a total content in carbon (C), silicon (Si) and oxygen (O) equal or greater than 98 wt%, with Si ranging from 20 to 50 wt%, C from 10 to 50 wt% and O from 20 to 50 wt%.

The SiOC particles of the electrode active material of controlled morphology according to the invention, which have the aforementioned specific features in terms of shape, size and composition, are referred to as "spherical SiOC particles" in the rest of the text.

In particular, within the meaning of the present invention, the term "spherical" is intended to denote particles

having a circularity coefficient, for example determined as detailed below, between 0.95 and 1.0.

According to a particular embodiment, the spherical SiOC particles may be coated with at least one amorphous carbon layer.

According to a specific embodiment, the electrode active material is formed of said spherical SiOC particles, said particles being in particular coated with an amorphous carbon layer.

The material according to the invention comprising said spherical SiOC particles, optionally coated with an amorphous carbon layer, is referred to as "spherical SiOC particulate material" in the text. This term thus includes in particular materials comprising, in particular consisting of, non-coated spherical SiOC particles and/or particles of core/coating structure with a core formed of said spherical SiOC particle and coated with at least one amorphous carbon layer.

As illustrated in the examples, the inventors have shown that the use of said SiOC particulate material of controlled morphology makes it possible to provide an electrode with an increased density, thus allowing a high energy density. This makes it possible to yield an electrode, especially for a Li-ion battery, with significantly improved reversible volumetric capacity, without any detrimental effect on the other electrochemical performances of the battery, in particular on the cycle life of the battery.

In particular, a lithium-ion battery using a spherical SiOC particulate material according to the invention displays a reversible volumetric capacity higher than 700 $mAh/cm^3$, in particular higher than 800 $mAh/cm^3$, on a large number of charge/discharge cycles. The electrodes formed from said spherical SiOC material have advantageously the ability to store large quantities of lithium.

The presence of a carbon coating enables to still increase the reversible volumetric capacity of the battery.

Furthermore, a battery prepared from an electrode active material according to the invention has advantageously both high weight capacity and cycle durability.

Thus, according to another of its aspects, the present invention relates to an electrode active material comprising at least a spherical SiOC particulate material as defined above.

According to yet another of its aspects, it relates to an electrode comprising, as electrochemically active material, such a spherical SiOC particulate material according to the invention.

An electrode active material in accordance with the invention is particularly suitable for an anode electrode, in particular for a lithium-ion battery, and especially for a lithium-ion secondary battery.

Thus, according to still another of its aspects, an object of the present invention is a battery, in particular a lithium-ion battery, especially a lithium-ion secondary battery, comprising an electrode, preferably a negative electrode, using the aforementioned spherical SiOC particulate material.

Moreover, as detailed below, the spherical SiOC particles, used for the electrode active material of the invention may be prepared by a simple and inexpensive method, which makes it possible to yield the specific desired morphology, especially in terms of shape and size.

In particular, the spherical SiOC particles as defined above may be prepared from spherical silicon oxycarbide precursor particles, also referred to as "precursor particles".

These spherical silicon oxycarbide precursor particles are more particularly spherical particles of at least one silicon-containing polymer. Preferably, the spherical SiOC particles of controlled shape and size according to the invention are prepared from spherical polysilsesquioxane particles.

Such spherical polysilsesquioxane particles may be in particular synthetized according to the method described by JNC Corporation in document EP 3 106 433 which is herein incorporated by reference.

In particular, this method involves the successive steps of forming a hydrolysate by adding an hydrolysable alkoxysilane to an aqueous acidic medium, and submitting said hydrolysate to a polycondensation reaction in an alkaline medium to obtain said spherical silicon oxycarbide precursor particles.

Thus, according to yet another of its aspects, the present invention relates to a method for producing a particulate material comprising spherical SiOC particles, comprising at least the steps, in that order, of:

(i) providing spherical silicon particles of at least one silicon-containing polymer particles, in particular spherical polysilsesquioxane particles;
(ii) pyrolysing the particulate material of step (i) to yield a SiOC material formed of aggregated spherical SiOC particles, said SiOC particles having an average particle size ranging from 0.1 to 100 μm, a sphericity ranging from 0.95 to 1.0, and a total content in carbon (C), silicon (Si) and oxygen (O) equal or greater than 98 wt%, with Si ranging from 20 to 50 wt%, C from 10 to 50 wt% and O from 20 to 50 wt%;
(iii) processing the spherical SiOC particulate material of step (ii) into a powder form; and
(iv) forming an amorphous carbon coating on the surface of the spherical SiOC particles obtained in step (iii).

Other features, advantages and modes of application of the spherical SiOC particulate material, method for its preparation and its implementation according to the invention will emerge more clearly on reading the following description

and examples.

In the remainder of the text, the expressions "between ... and ...", "ranging from ... to ..." and "varying from ... to ..." are equivalent and are understood to mean that the limits are included, unless otherwise mentioned.

Unless otherwise mentioned, the expression "comprising a" should be understood as "comprising at least one".

## SPHERICAL SiOC PARTICULATE MATERIAL

As mentioned above, the particulate material according to the invention may be formed, in whole or in part, of spherical micro-sized silicon oxycarbide (SiOC) particles.

The terms "particulate material" is understood to mean a material consisted of particles.

According to a preferred embodiment, the particulate material according to the invention consists of spherical SiOC particles of controlled shape and size, said particles being optionally coated with a carbon layer.

The spherical SiOC particles according to the invention have a total content in carbon (C), silicon (Si) and oxygen (O) equal or greater than 98% by weight. This means that the spherical SiOC particles of the invention essentially consist in Si, O and C.

More particularly, the spherical SiOC particles of the invention may contain silicon in a range from 20 to 50% by weight, and preferably from 30 to 50% by weight. Further, they may have a content in carbon ranging from 10 to 50% by weight, preferably from 10 to 30% by weight. Furthermore, they may have a content in oxygen ranging from 20 to 50% by weight, preferably from 30 to 50% by weight.

According to a specific embodiment, the SiOC particles thus contain from 30 to 50% by weight of silicon, from 10 to 30% by weight of carbon and from 30 to 50% by weight of oxygen.

The composition of the SiOC particle material may be determined by elemental analysis, in particular as detailed in the examples below.

If elements other than Si, C and O are detected, then hydrogen is the only other element that can be detected. In particular, hydrogen may be present in trace amounts, in particular in a content less than 2 wt% based on the total weight of the spherical SiOC particles, preferably less than 1 wt%. Generally, the particles have a content in hydrogen between 0.5 and 1.2 wt%. In particular, nitrogen is not present in the particles in a detectable quantity.

According to a preferred embodiment, the spherical SiOC particles according to the invention consist of Si, O, C and eventually hydrogen in trace amounts.

The spherical SiOC particles of the invention are advantageously homogeneous.

The term "homogeneous" is intended to denote that the spherical SiOC particles have a good homogeneity in terms of their composition, in other words that the distribution in Si, O and C within the particle volume is overall the same.

In particular, the spherical SiOC particles according to the invention are distinct from composite particles, formed of two or more distinct components, such as, for example, from particles which comprise, in a SiOC matrix, particles, for example silicon or graphite particles.

The spherical SiOC particles according to the invention are amorphous.

Further, they are preferably non-porous. The non-porosity may be defined by an adsorption isotherm of nitrogen classified into TYPE III defined in IUPAC.

According to a specific embodiment, the spherical SiOC particulate material presents a specific surface area measured by the Brunauer Emmett Teller (BET) method ranging from 0.01 $m^2/g$ to 100 $m^2/g$, in particular from 0.01 $m^2/g$ to 50 $m^2/g$, preferably from 0.05 $m^2/g$ to 30 $m^2/g$ and more preferably from 0.05 to 10 $m^2/g$.

As mentioned above, the spherical SiOC particles used according to the invention have an average particle size (D50) ranging from 0.1 $\mu$m to 100 $\mu$m, in particular from 0.5 $\mu$m to 40 $\mu$m and more particularly from 1 to 20 $\mu$m.

The average particle size (D50) may be obtained by laser diffraction analysis according to a technique known to a person skilled in the art.

Advantageously, as detailed hereafter, the morphology, in particular particle size and size distribution of the SiOC particles may be easily controlled during the manufacturing process of said particles. By way of example, the particle size of the spherical SiOC particulate material may be controlled by adjusting the features of the polysilsesquioxane precursor particles, in particular through the control of synthesis parameters such as the acidity during the hydrolysis reaction and/or the basicity during the polycondensation reaction.

The spherical SiOC particulate material has in particular a good homogeneity in terms of shape and particle size distribution.

Thus, the spherical SiOC particulate material has a uniform particle size. In particular, the spherical SiOC particles of the invention preferably exhibit a good size dispersion. In particular, the variation coefficient of the spherical SiOC particulate material is less than or equal to 30%, and preferably of less than or equal to 20%.

The size dispersion and variation coefficient may be evaluated by laser diffraction analysis of the particles.

Further, the SiOC particles have a high sphericity, in particular with no anisotropy in the micro-sized range.

The sphericity of the SiOC particles used according to the invention is more than 0.95, in particular comprised

between 0.95 to 1.0.

The "sphericity" can be determined by using a scanning electron miscroscope (SEM) to observe the image, and by using an image analysis software (for example, "Mac-View" made by Mountech Co., Ltd) for analysis. In such image analysis software, a plurality of non-overlapping particles is randomly selected as samples from the SEM image, wherein the cross sectional area and circumference of the particles in the SEM image was determined, and from the mean of these values, a "circularity coefficient" can be automatically calculated and provided by the program. Within the meaning of the invention, the "sphericity" thus refers to the "circularity coefficient".

The "sphericity", also noted "Ci" for the circularity coefficient, may be defined by the following formula:

$$Ci = \frac{4\pi A}{P^2}$$

with A representing the area of the cross sectional particle, and P representing the perimeter (circularity length or circumference) of the particle.

A circularity coefficient of 1 thus means a perfect circle for the particle observed in the image obtained by SEM.

As mentioned above, according to a particular embodiment, the spherical SiOC particles according to the invention may be coated with an amorphous carbon layer.

More particularly, the particles of the SiOC particulate material of the invention may be are of core/coating structure, with a core formed of said spherical SiOC particle and coated with at least one amorphous carbon layer.

In particular, the coating rate may be less than or equal to 50 wt%, more particularly comprised between 10 wt% and 30 wt%, relative to the total weight of the particle.

The carbon layer formed at the surface of the spherical SiOC particles may have a thickness ranging from 1 nm to 200 nm, and especially from 5 nm to 50 nm.

As illustrated in the examples, the presence of a carbon coating enables to still increase the reversible volumetric capacity of a battery prepared from said electrode active material according to the invention.

Advantageously, the spherical SiOC particulate material of the invention is in a powder form.

## PREPARATION METHOD OF THE SPHERICAL SiOC PARTICULATE MATERIAL

### Spherical silicon oxycarbide precursor particles

As mentioned above, the spherical silicon oxycarbide (SiOC) particle material may be obtained from spherical particles of at least one silicon-containing polymer, also referred to as "spherical silicon oxycarbide precursor particulate material".

In particular, said spherical silicon oxycarbide precursor particulate material has no melting point or softening point. This means that the spherical precursor particle material does not melt even above the decomposition temperature (around 300°C).

The spherical silicon oxycarbide precursor particles are more precisely spherical particles of one or more silicon-containing polymer(s). In particular, the spherical silicon oxycarbide precursor particles do not contain any internal particles, for example silicon or graphite particles.

The spherical silicon oxycarbide precursor particles have preferably a high sphericity, in particular a sphericity greater than or equal to 0.95, in particular comprised between 0.95 and 1.0.

Preferably, the spherical silicon oxycarbide precursor particles are spherical polysilsesquioxane particles.

The silicon-containing polymer may be of various natures. In particular, it may be chosen from polycarbosilanes, polysilazanes, polysilanes, polysiloxanes and polysilsesquioxanes.

Generally, polycarbosilanes contain units of the type ($R^1R^2SiCH_2$), ($R^1Si(CH_2)_{1,5}$) and/or ($R^1R^2R^3Si(CH_2)_{0,5}$) where each $R^1$, $R^2$ and $R^3$ is independently selected from hydrogen and hydrocarbons having 1-20 carbon atoms. The hydrocarbons can include alkyls such as methyl, ethyl, propyl and butyl; alkenyls such as vinyl and allyl; and aryls such as phenyl. In addition, the hydrocarbon radicals can contain hetero atoms such as silicon, nitrogen or boron. The polycarbosilanes may also be substituted with various metal groups such as boron, aluminium, chromium and titanium. The substituted polycarbosilanes are also known in the art and can be manufactured by known methods.

The polysilazanes useful herein are also known in the art and generally contain units of the type ($R^1R^2SiNR^4$), ($R^1Si(NR^4)_{1.5}$) and/or ($R^1R^2R^3Si(NR^4)_{0.5}$) and/or

$$(R^1R^2CR^3R^4CR^5R^6CSiNR^7)$$

wherein $R^1$, $R^2$ and $R^3$ are described above and $R^4$, $R^5$, $R^6$ and $R^7$ are independently selected from hydrogen and hydrocarbons having 1-20 carbon atoms.

The polysilanes useful herein are known in the art and generally contain units of the formula ($R^1R^2R^3Si$), ($R^1R^2Si$) and ($R^3Si$) wherein $R^1$, $R^2$ and $R^3$ are as described above. Examples of specific polysilane units are ($Me_2Si$), (PhMeSi), (MeSi), (PhSi), (ViSi), (PhMeSi), (MeHSi), (MeViSi), ($Ph_2Si$), ($Me_2Si$), ($Me_3Si$) and others, wherein Me is methyl, Ph is phenyl and Vi is vinyl. The polysilane may also be substituted with various metal groups (i.e., containing repeating metal-Si units). Examples of suitable metals include boron, aluminum, chromium and titanium.

The polysiloxanes useful herein are known in the art and are of the structure:

$$(R^1R^2R^3SiO_{0.5})_w(R^4R^5SiO)_x(R^6SiO_{1.5})_y(SiO_{4/2})_z$$

wherein $R^1$, $R^2$, $R^3$, $R^4$, $R^5$ and $R^6$ are as described above and w, x, y and z are mole fractions with w=0 to 0.8, x=0 to 0.9, y=0 to 0.9, z=0.3 to 0.9 and w+x+y+z=1.

Examples of specific siloxane units include ($MeSiO_{1.5}$), ($PhSiO_{1.5}$), ($ViSiO_{1.5}$), ($HSiO_{1.5}$), (PhMeSiO), (MeHSiO), (PhViSiO), (MeViSiO), ($Ph_2SiO$), ($Me_2SiO$), ($Me_3SiO_{0.5}$), ($PhViSiO_{0.5}$), ($Ph_2HSiO_{0.5}$), ($H_2ViSiO_{0.5}$), ($Me_2ViSiO_{0.5}$), ($SiO_{4/2}$) and other wherein Me is methyl, Ph is phenyl and Vi is vinyl.

Polysilsesquioxanes useful herein are known in the art. Generally, these polysilsesquioxanes contain units of the type $(RSiO_{3/2})_x$ wherein R is a hydrocarbon radical, saturated or unsaturated, linear, branched or cyclic, for example of the type $-C_nH_{2n+1}$, with n being an integer ranging from 1 to 20, especially a methyl, ethyl, propyl, butyl, pentyl, hexyl, heptyl, octyl, nonyl, decyl, dodecyl, tridecyl, tetradecyl, hexadecyl, octadecyl and eicosyl; or a group aryl, especially phenyl or tolyl group, a cycloalkyl, particularly cyclobutyl, cyclopentyl or cyclohexyl; alkenyl, especially vinyl or allyl; aralkyl including 2-phenylethyl or benzyl, R may also comprise one or more halogen atoms, in particular fluorine or chlorine, preferably R is methyl, ethyl, propyl or phenyl. x is the number of patterns, and can be between 1 and 10, especially 1 to 4.

Within the meaning of the invention, the expression "silicon-containing" polymer as used herein is intended to include copolymers or blends of the above silicon-containing polymers and other polymers which are also useful herein. For instance, copolymers of silicon-containing polymers and silalkylenes ($R_2Si(CH_2)_nSiR_2O$) such as silethylene, silarylenes such as silphenylene ($R_2Si(C_6H_4)_nSiR_2O$), silazanes ($R_2SiN$), silanes ($R_2Si-SiR_2$), organic polymers and others can be used herein. The silicon-containing polymer, as described above, may be used alone or in combination with two or more types thereof.

The silicon-containing polymer is capable to yield under pyrolysis to an amorphous SiOC material.

According to one particularly preferred embodiment, the spherical silicon oxycarbide precursor particles of the invention are spherical polysilsesquioxane particles.

Preferably, silicon-containing polymers which contain phenyl groups are used.

By way of example, the spherical silicon oxycarbide precursor particles are spherical phenyl-polysilsesquioxane particles.

*Preparation of the spherical silicon oxycarbide precursor particles*

According to a particularly preferred embodiment, the spherical silicon oxycarbide precursor particles are prepared according to a method described in document EP 3 106 433 by JNC Corporation.

More particularly, the spherical silicon oxycarbide precursor particulate material may be obtained by at least the steps, in that order, consisting in:

(a) forming a hydrolysate by adding a hydrolysable organoalkoxysilane to an aqueous acidic medium, in particular an acetic acid aqueous solution; and
(b) submitting said hydrolysate in an alkaline medium to a polycondensation reaction to obtain the desired spherical silicon oxycarbide precursor particles.

*Hydrolysis step (a)*

Step (a) may be performed by adding a hydrolysable organoalkoxysilane compound, in particular an organotrialkoxysilane compound, preferably drop-wise, to an acidic aqueous medium.

Preferably, the reaction medium is continuously stirred during the addition of the hydrolysable organoalkoxysilane compound.

The hydrolysable organoalkoxysilane may be any silane having at least one hydrolysable group, for example, organoalkoxysilanes having hydrolysable groups such as halogen atoms or alkoxy groups.

To obtain high hydrolysis properties, said organoalkoxysilane preferably has three hydrolysable groups, and

more preferably, is an organotrialkoxysilane having three alkoxy groups.

The hydrolysis of the hydrolysable organotrialkoxysilane is performed by known methods. For example, the reaction may be carried out at ambient temperature or by heating in a solvent such as alcohol or DMF, and in the presence of a mixture of water and inorganic acid(s) such as hydrochloric acid or organic acid(s) such as acetic acid. The final hydrolysate thus may contain, besides the hydrolysate of said organoalkoxysilane, substances derived from the solvent, acid and water.

In particular, step (a) is preferably performed by adding the organoalkoxysilane, in particular the organotrialkoxysilane, slowly to the acid aqueous solution, under room temperature and with continuous stirring of the solution. The parameters such as addition rate, dropping amount and addition time are controlled such that the temperature conditions of the reaction medium, that depend on the exothermic reaction of the hydrolysis reaction, do not change significantly.

At the end of step (a), a solution comprising the organoalkoxysilane hydrolysate product is obtained.

According to a particular embodiment, the hydrolysable organotrialkoxysilane is of formula (1) below

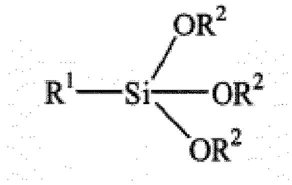

(1)

wherein $R^1$ and $R^2$ each independently represents a group selected from a substituted or unsubstituted $C_1$ to $C_{20}$ alkyl group, a substituted or unsubstituted aryl group, or a substituted or unsubstituted arylalkyl group,
being understood that, in the $C_1$ to $C_{20}$ alkyl group, any hydrogen may be substituted with a halogen atom; and any $-CH_2-$ may be substituted with a group chosen from -O-, -CH=CH-, cycloalkylene, cycloalkenylene; and
in the alkylene of the substituted or unsubstituted arylalkyl group, any hydrogen may be substituted with a halogen atom; any $-CH_2-$ may be substituted with a group chosen from -O-, -CH=CH-, cycloalkylene or cycloalkenylene.

In the context of the present invention:

- "$C_t$ to $C_z$" where t and z may take the values from 1 to 20 denotes a carbon-based chain which may have from t to z carbon atoms;
- a halogen atom denotes a fluorine, chlorine, a bromine or an iodine;
- an alkyl denotes a saturated and linear, branched or cyclic aliphatic group, in particular comprising from 1 to 20 carbon atoms;
- an alkenyl denotes a mono- or polyunsaturated and linear, branched or cyclic aliphatic group, in particular comprising from 2 to 12 carbon atoms, for example comprising one or more ethylenic unsaturations;
- an aryl denotes a mono-, bi- or tricyclic aromatic group comprising between 6 and 14 carbon atoms. Mention may be made, as examples of aryl groups, of the phenyl or naphthyl groups, and the like.

As examples of said organotrialkoxysilane, mention may be made of methyl trimethoxysilane, methyl triethoxysilane, ethyl trimethoxysilane, n-propyl trimethoxysilane, i-propyl trimethoxysilane, n-butyl trimethoxysilane, s-butyl trimethoxysilane, t-butyl trimethoxysilane, phenyl trimethoxysilane, phenyl triethoxysilane, 2-phenylethyltrimethoxysilane, 2-cyanoethyl trimethoxysilane, γ-glycidoxypropyl trimethoxysilane, vinyl trimethoxysilane.

The organoalkoxysilane may be used alone, or in combination of two or more.

Preferably, methyl trimethoxysilane, phenyl trimethoxysilane or mixtures thereof may be used.

The hydrolysable organoalkoxysilane may be fully or partially hydrolyzed.

During the hydrolysis stage of the organoalkoxysilane, a polycondensation reaction may also partially carried out. Therefore, a portion of molecular chains may be present in the hydrolysate obtained at the end of stage (a).

A person skilled in the art is able to adjust the synthesis parameters of the hydrolysis reaction, for example in terms of hydrolysis temperature and time, concentration of acid in the reaction medium, etc., to reach the desired hydrolysate product.

In particular, the pH of the reaction medium in the hydrolysis step (a) is adjusted so that the hydrolysis rate is faster than the polycondensation reaction rate. The pH range where the hydrolysis rate is faster than the polycondensation reaction rate depends on the nature of the organoalkoxysilane. Typically, the pH of the acidic aqueous medium is adjusted between 3 and 6, and preferably between 4 and 6.

The acids used to adjust the pH may be chosen from organic acids or inorganic acids. In particular, organic acids may be chosen from formic acid, acetic acid, propionic acid, oxalic acid or citric acid. Inorganic acids may be

chosen from hydrochloric acid, sulfuric acid, nitric acid or phosphoric acid. Preferably, acetic acid is used.

According to a particular embodiment, a dilute acetic acid aqueous solution is used to obtain a solution of the hydrolysate of said organoalkoxysilane at a pH between 5.0 and 5.8.

*Polycondensation step (b)*

In particular, step (b) of polycondensation is performed by adding an alkaline solution, in particular of ammonia water, to the hydrolysate obtained at the end of step (a).

More particularly, the reaction medium is adjusted to be alkaline to undergo the polycondensation reaction. Preferably, the solution of the hydrolysate of the organoalkoxysilane obtained from the hydrolysis step (a) is directly continuously used in the polycondensation stage.

In particular, the pH of the reaction medium in the polycondensation step (b) is adjusted so that the condensation reaction rate is faster than the hydrolysis rate. The pH for said polycondensation reaction depends on the nature of the organoalkoxysilane. Typically, it is below pH 3, or more often above pH 7.

In order to obtain spherical particles with a uniform particle size, the pH of the solution containing the hydrolysate is preferably adjusted to a pH value between 7 and 12.

The alkaline substance used to adjust the pH to the range of pH 7-12 is preferably chosen from metal hydroxides selected from group Ia, group IIa of the periodic table, oxides, carbonates or organic nitrogen compounds and ammonia. Ammonia is the most preferable, since it can be easily removed after the reaction. It may be used in the form of ammonia water.

In a particular embodiment, ammonia water is used as the alkaline solution to change the pH range of the hydrolysate solution to a pH value between 7.8 and 10.1 in the final reaction medium.

At the end of step (b), a solution of spherical silicon oxycarbide precursor particles, in particular of spherical polysilsesquioxane particles, is obtained in a good dispersed state.

A person skilled in the art is able to adjust the experimental conditions for the implementation of the synthesis of the precursor particles, in terms, for example, of stirring intensity and speed, solvent addition speed, acidity of the hydrolysis medium and/or basicity of the polycondensation reaction medium, from the viewpoint of the desired size and shape of the particles.

In particular, with a polycondensation medium of stronger alkaline basicity, the precursor particles may be smaller. Also, if the concentration of the hydrolysate solution increases, the particle size of the particles may be larger. Further, larger particles may be formed with stronger stirring conditions, while smaller particles may be formed with weaker stirring conditions of the reaction medium.

The spherical silicon oxycarbide precursor particles, in particular the spherical polysilsesquioxane particles, can be recovered by filtration and separation using a filter having an opening of 0.1 -1.0 $\mu$m.

Optionally, one or more subsequent stages of washing, in particular with water and/or organic solvents, and/or of drying may be performed to yield the spherical silicon oxycarbide precursor particles.

**Preparation of the spherical SiOC particulate material**

According to a particularly preferred embodiment, the method for the preparation of the spherical SiOC particles used according to the invention may comprise the following stages consisting in:

(i) providing spherical particles of at least one silicon-containing polymer, in particular spherical polysilsesquioxane particles;
(ii) pyrolysing the particulate material of step (i) to yield a SiOC material formed of aggregated spherical SiOC particles; and
(iii) processing the pyrolysis material obtained in step (ii) into a powder formed of the desired spherical SiOC particles.

According to a preferred embodiment, as mentioned above, the spherical silicon oxycarbide precursor particles are spherical polysilsesquioxane particles. In particular, they may obtained according to the method involving stages (a) and (b) as previously described.

Thus, according to a particular embodiment, the spherical SiOC particles according to the invention may be prepared by a method comprising at least the following stages, in that order:

- forming a hydrolysate by adding a hydrolysable organoalkoxysilane to an aqueous acidic solvent, in particular an acetic acid aqueous solution;
- submitting said hydrolysate in an alkaline medium to a polycondensation reaction to obtain spherical silicon oxycarbide precursor particles;

- pyrolysing said spherical silicon oxycarbide precursor particulate material to yield a SiOC material formed of aggregated spherical SiOC particles; and
- processing the obtained pyrolysis material into a powder formed of the desired spherical SiOC particles.

Advantageously, such a synthesis method makes it possible to easily control the morphology, in particular in terms of shape, size and size distribution, of the SiOC particulate material. Further, the method is simple and inexpensive.
The present invention is however not limited to the use of this synthesis method. Other methods could be used to prepare the desired spherical SiOC particles of the invention. By way of example, spherical SiOC particles may be manufacture according to the method disclosed in JP No. 2007-112693.
The pyrolysis of the spherical silicon oxycarbide precursor material may be carried out in an inert or reductive gaseous atmosphere. As examples of the inert gas, mention may be made of nitrogen, helium and argon. A reducing gas such as a hydrogen gas may be included in the aforementioned inert gas. For example, the pyrolysis step may be carried in argon or argon-$H_2$. Inert atmospheres are used during pyrolysis to prevent oxygen incorporation into the silicon oxycarbide matrix or loss of carbon through combustion.
The adjustment of the temperature and time conditions of the pyrolysis to reach the desired product falls within the abilities of a person skilled in the art.
In particular, the product may be pyrolysed by heating to a temperature (finally reachable temperature) ranging from 600°C to 1400 °C, in particular from 900°C to 1300 °C, especially from 1100°C to 1300°C.
The heating rate may range from 1°C/min to 30°C/min, in particular from 2°C/min to 10°C/min to reach the final pyrolysis temperature.
The heating duration at final temperature may be comprised between 5 minutes and 10 hours, in particular between 30 minutes and 5 hours.
Pyrolysis of the product may be performed in any conventional high temperature furnace equipped with a means to control the furnace atmosphere. Such furnaces such as tubular furnaces are well known in the art and many are commercially available. The product to be pyrolysed is, for example, fed into a crucible made of quartz or alumina.
The resultant pyrolysed product, obtainable as a black solid, is formed of aggregated amorphous spherical SiOC particles.
In the last stage, the product of pyrolysis is ground into a powder having an average particle size (D50) in a range of 0.1 μm to 100 μm.
A person skilled in the art is able to carry out known techniques to process the pyrolysis product into the desired powder form, such as by grinding, milling (for example in a jet mill or hammer mill).
By way of example, the powder may be produced by mechanically milling, for example by using a manual mortar or a bowl and balls.
The milling speed may range from 10 to 1000 rpm, in particular from 200 to 600 rpm. As for the milling time, it may be comprised between 1 minute and 30 minutes, preferentially between 2 minutes and 10 minutes.
Preferably, the powder of pyrolysis product has an average particle size (D50) in a range of 0.1 μm to 100 μm, in particular of 0.5 μm to 40 μm, and more particularly of 1 μm to 20 μm.

Carbon coating

According to a particular embodiment, the spherical SiOC particles, in particular as obtained at the end of stage (iii), may be coated in a subsequent stage (iv), with an amorphous carbon layer.
According to a particular embodiment, said carbon coating may be formed by:

(1) coating the spherical SiOC particles with at least one organic carbon precursor containing no silicon atoms and being able to be transformed into carbon during a pyrolysis process; and then
(2) pyrolysing said coated particles to obtain the carbon coating.

Organic compounds suitable for forming carbon by pyrolysis are well-known. In particular, the organic carbon precursor may be chosen from poly(vinylidene fluoride) (PVdF), sucrose, chlorinated polyethylene, polyvinyl chloride, polyethylene, phenolic resin, polyethylene oxide, and pitch, polyvinyl alcohol, polystyrene, carboxymethyl cellulose, alginic acid, oxalic acid including sodium or potassium salt, phenolic resin and polyvinyl fluoride.
According to one particularly preferred embodiment, said organic carbon precursor is a polyvinyl alcohol or sucrose.
The coating made of carbon precursor can be formed by conventional methods.
A person skilled in the art is able to carry out known techniques to form a coating of carbon precursor on the surface of the particles.
By way of example, the carbon precursor may be dissolved in a suitable aqueous or organic solvent. The

spherical non-coated SiOC particles obtained at the end of step (iii) are then added to the solution of carbon precursor, and the resulting mixture can then be dried, for example by spray-drying to reach the coated particles.

The coating of carbon precursor may also be obtained by other standard methods, for example by chemical vapor deposition technic, mechanical milling or freeze drying.

The amount of carbon precursor necessary to obtain the carbon coating clearly falls within the competence of a person skilled in the art.

According to a particular embodiment, the carbon precursor is crosslinkable. Within the context of this variant, the particles coated with said crosslinkable carbon precursor may be subjected, prior to the pyrolysis step (2), to a pre-treatment, in particular a heat-treatment, in order to induce the crosslinking of said carbon precursor.

The heat-treatment may be performed under air at a temperature ranging from 50 to 400°C, in particular for 1 hour to 30 hours.

The adjustment of the pyrolysis conditions in step (2) to yield the desired carbon coating comes within the competence of a person skilled in the art.

In particular, the pyrolysis may be carried out in an inert or reductive gaseous atmosphere, such as argon or argon-$H_2$.

By way of example, the pyrolysis temperature (finally reachable temperature) may range from 600 to 1400 °C, in particular from 900 to 1100 °C.

The heating rate may range from 1°C/min to 30°C/min, in particular from 2°C/min to 10°C/min to reach the final temperature. The heating duration at final temperature may be comprised between 5 minutes and 10 hours, in particular between 30 minutes and 3 hours.

The final powder, obtained as a black solid, has a particle size, obtained for example by laser diffraction analysis, ranging from 0.1 $\mu$m to 100 $\mu$m, in particular from 0.5 to 40 $\mu$m.

## APPLICATION AS ELECTRODE ACTIVE MATERIAL

The aforementioned spherical SiOC particulate material according to the invention can be used as an electrode active material for forming an electrode.

According to yet another of its aspects, the present invention thus relates to an electrode active material comprising at least a spherical SiOC particulate material as defined above or as obtained according to the method as detailed above.

Advantageously, the spherical SiOC particulate material is in a powder form, which makes it easier its use for forming electrodes.

The term "electrode active material" is understood to mean, within the meaning of the invention, a material for insertion/deinsertion of a cation $C^+$ ($Li^+$, $Na^+$, $K^+$ for example) of an electrode of an electrochemical generator. More particularly, the active material of the positive electrode is capable of releasing $C^+$ ions at the time of charging and of incorporating $C^+$ ions at the time of the discharging of the electrochemical generator. Conversely, the active material of the negative electrode is capable of incorporating $C^+$ ions at the time of the charging and of releasing $C^+$ ions at the time of the discharging of the electrochemical generator.

Preferably, the spherical SiOC particulate material of the present invention is suitable as a material of a negative electrode, in particular for a lithium-ion battery.

The preparation of an electrode comprising the spherical SiOC particulate material of the invention and its use into the desired battery falls within the abilities of a person skilled in the art.

More particularly, the electrode material according to the invention may comprise, in addition to said spherical SiOC particles, one or more additional compounds conventionally employed, in particular, one or more conductive agents and/or binders.

Thus, according to another of its aspects, the present invention relates to an electrode active material comprising at least a particulate material comprising spherical silicon oxycarbide particles as described above, and at least one conductive agent and/or at least one binder.

As examples of conductive agents, mention may be made of carbon fibers, carbon black (such as Ketjen black, acetylene black, or the like), carbon nanotubes, and the like.

As examples of binders that may be comprised in an electrode according to the invention, mention may be made of fluorine-based binder, such as polytetrafluorethylene, polyvinylidene fluoride binder, carboxymethyl cellulose, polysaccharides or latex such as styrene-butadiene rubber.

As mentioned above, the spherical SiOC particles according to the invention may be coated with an amorphous carbon layer. Thus, according to still another of its aspects, the present invention relates to an electrode active material comprising at least a spherical silicon particulate material comprising spherical silicon oxycarbide particles coated with an amorphous carbon layer as described above.

In a classic way, an electrode according to the invention can have a collector on which the active material of

the invention is applied. As examples of collector for a negative electrode, mention may be made of mesh, foil or the like of a metal such as copper, nickel, or alloys thereof, or the like. The thickness of the electrode active material on the collector may range from 5 to 300 $\mu$m, in particular from 10 to 100 $\mu$m and more particularly from 50 to 100 $\mu$m.

An electrode according to the invention may comprise any other additives commonly used in electrodes.

According to a specific embodiment, the electrode active material represents from 70 to 99 %, in particular from 80 to 99 % by weight of the total weight of the electrode.

The electrode according to the present invention can be used in any battery configuration. According to yet another of its aspects, one subject of the present invention is a battery comprising an electrode according to the invention.

As examples of batteries, mention may be made of a lithium ion primary battery, a lithium ion secondary battery, a capacitor, a hybrid capacitor, an organic radical battery, or a dual carbon battery.

As the aforementioned battery, a lithium-ion battery, especially a secondary lithium-ion battery is particularly preferable.

The lithium-ion secondary battery can be produced in accordance with conventional methods. In general, a lithium-ion battery comprises two electrodes, for example a negative electrode formed from the aforementioned electrode, a positive electrode capable of charging and discharging lithium and an electrolyte.

As examples of electrolyte solution, mention may be made of, for examples, lithium salts such as $LiClO_4$, $LiAsF_6$, $LiPF_4$, $LiPF_6$, $LiBF_4$, $LiR_FSO_3$, $LiCH_3SO_3$, $LiN(R_FSO_2)_2$, $LiN(R_FSO_2)_3$; $R_F$ being chosen from a fluorine or perfluoroalkyl of 1 to 8 carbon atoms. The salt is preferably dissolved in a polar aprotic solvant such as ethylene carbonate, propylene carbone, ethylmethyl carbonate, and the like. It may be supported by a separator sandwiched between the two electrodes. Know separators such as polyolefin-based porous membranes such as porous polypropylene nonwoven fabric, porous polyethylene nonwoven fabric and the like can be used.

A person skilled in the art is able to choose the type and amount of the battery components based on component material properties and the desired performance and safety requirements of the battery.

For example, the battery may be in the form of a conventional spiral wound type or a coin-cell type battery. Other configurations or components are possible.

The examples and figures which follow are presented by way of illustration and are non-limitative of the field of the invention.

## FIGURES

Figure 1: SEM picture of the spherical SiOC powder in accordance with the invention prepared in example 1;
Figure 2: Particle size distribution diagram obtained by laser diffraction measurement of the spherical SiOC powder synthetized in example 1;
Figure 3: Particle size distribution diagram obtained by laser diffraction measurement of the spherical SiOC powder synthetized in example 2;
Figure 4: Electrochemical performances, discharge capacity v/s number of cycles (figure 4a) and volume capacity v/s number of cycles (figure 7b) of the batteries prepared according to example 6, from the SiOC powders synthetized in examples 1, 2 and counter-example 5.

## EXAMPLES

### EXAMPLE 1

*Preparation of non-coated SiOC particulate material in accordance with the invention*

A sample of 46.0985 g and a sample of 40.332 g of spherical polysilsesquioxanes (PSQ) compound (prepared according to the example 1 of EP 3 106 433), were put in two quartz crucibles and heat treated under argon atmosphere for 5 hours at 1150 °C.

After heat treatment, the samples were recovered and hand milled in a mortar. The weight loss for each sample from the heat treatment is respectively 20.4 and 20.5%.

Analysis of the obtained powder

*Elemental analysis*

The silicon content of the obtained powder is measured by inductively coupled plasma (ICP) emission spectrophotometry. Carbon content is measured by infrared absorption method after combustion in high frequency induction furnace. Oxygen content is measured as carbon monoxide and carbon dioxide by a non-dispersive infrared detector.

The elemental analysis of the obtained powder shows that the product has the following general formula $SiO_{1,48}C_{1,33}$.

*SEM analysis*

The observation of the powder by Scanning Electron Microscopy (SEM) (Figure 1) shows that the particles have a spherical shape.

*Sphericity*

From the observed image obtained by Scanning Electron Microscopy (SEM), 50 non overlapping particles were randomly selected as samples, and analysed using an image analysis software (Mac-View made by Mountech Co. Ltd.), to obtain the cross sectional area and circumference of the particles, from which the circularity coefficient (sphericity) was calculated.

*Laser Diffraction analysis*

The particle size distribution obtained by laser diffraction measurement is represented in Figure 2. The obtained powder has an average particle size (D50) of around 11.7 μm.

*BET specific surface area*

The BET specific surface area, measured by the nitrogen adsorption technic, of the obtained powder, is 21.4 $m^2/g$.

**EXAMPLE 2**

*Preparation of non-coated SiOC particulate material in accordance with the invention*

A sample of 23.0285 g of spherical polysilsesquioxanes (PSQ) compound (prepared according to the example 1 of EP 3 106 433), was put in a quartz crucible and heat treated under argon atmosphere for 5 hours at 1150 °C.

After heat treatment, the sample was recovered and milled at a speed of 400 rpm for 5 minutes. The weight loss of the sample from the heat treatment is 20%.

The particle size distribution obtained by laser diffraction measurement is represented in Figure 3. The obtained powder has an average particle size (D50) of around 2.2 μm.

**EXAMPLE 3**

*Preparation of coated SiOC particulate material in accordance with the invention*

A sample of 8.0014 g of the product prepared according to example 1 and 4.0191 g of sucrose were put together in a 250 mL round-bottom flask with 40 mL of water, 53 mL of EtOH and 4 mL of HCl (concentrated at 37%).

The suspension was stirred for two hours at room temperature, heated at 60 °C for 3 hours (refluxing) and heated at 80 °C for 12 hours to evaporate the solvent under a fume hood. An additional drying for 12 hours in the oven at 80 °C to dry the powder was performed.

The obtained powder was then heat treated under argon atmosphere for 2 hours at 1000°C.

After heat treatment, the sample was recovered and milled at a speed of 200 rpm for 10 minutes.

**EXAMPLE 4**

*Preparation of coated SiOC particulate material in accordance with the invention*

A sample of 8.0006 g of the product prepared according to example 1 and 0.8001 g of sucrose were put together in a 250 mL round-bottom flask with 40 mL of water, 53 mL of EtOH and 4 mL of HCl (concentrated at 37%).

The suspension was stirred for two hours at room temperature, heated at 60 °C for 3 hours (refluxing) and heated at 80 °C for 12 hours to evaporate the solvent under a fume hood. An additional drying for 12 hours in the oven

at 80 °C to dry the powder was performed.

The obtained powder was then heat treated under argon atmosphere for 2 hours at 1000°C.

After heat treatment, the sample was recovered and milled at a speed of 200 rpm for 10 minutes.

The coated SiOC particles have an average particle size (D50), determined by laser diffraction measurement, of 11.9 μm.

**EXAMPLE 5 *(comparative example)***

A sample of 15.05 g of non spherical polysilsesquioxanes (PSQ) compound was put in a quartz crucible and heat treated under argon atmosphere for 5 hours at 1200 °C.

After heat treatment, the sample was recovered and milled at a speed of 400 rpm for 30 minutes.

The weight loss during the heat treatment is 17.1%.

The obtained powder has a particle size distribution, determined by SEM analysis between 0.1 and 100 μm, and an average particle size (D50) of 13,3 μm. The BET specific surface area, measured by the nitrogen adsorption technic, of the obtained powder, is 1.5 $m^2/g$.

**EXAMPLE 6**

*Use of the materials of examples 1-5 as electrode active materials*

For each of examples 1 to 4 and counter-example 5, slurry containing the obtained material, carboxymethyl cellulose (CMS) used as binder and vapor grown carbon fibers (VGCF) used as conductive agent was coated on a 12 μm cupper foil and used as electrode.

The electrode was used in coin-cell type battery in order to evaluate the electrochemical performance of the material. The other electrode was lithium metal. The two electrodes were separated by a Celgard 2400 separator and the battery was filled with a $LiPF_6$-containing electrolyte.

Electrochemical performances were evaluated at a C-rate of C/10 (after a first cycle at C/20).

Results

The electrochemical performances (discharge capacity v/s number of cycles and volume capacity v/s number of cycles) of the batteries prepared from anode materials of examples 1, 2 and counter-example 5 are shown in Figure 4.

The performances of the batteries are summarized in the following table 1.

**TABLE 1**

| Sample | Electrode density (g/cm$^3$) | 1$^{st}$ CE$^{(1)}$ (%) | Reversible weight capacity$^{(2)}$ (mAh/g) | Reversible volumetric capacity$^{(2)}$ (mAh/cm$^3$) | Capacity retention Cycles 5 to 23 (%) |
|---|---|---|---|---|---|
| **Ex 1** | 1.13 | 53 | 756 | 855 | 91 |
| **Ex 2** | 1.44 | 53 | 741 | 1066 | 92 |
| **Ex 3** | 1.29 | 52 | 672 | 867 | 82 |
| **Ex 4** | 1.51 | 55 | 755 | 1140 | 83 |
| **Comparative Ex 5** | 0.81 | 53 | 779 | 631 | 94 |
| (1) initial irreversible loss, in other words the loss in charging/discharging (or delithiation/lithiation) capacity in the 1$^{st}$ cycle;<br>(2) delithiation capacity in the 1$^{st}$ cycle (C/10 conditions) | | | | | |

As shown in table 1, spherical silicon oxycarbide materials of the invention provide significantly improved reversible volumetric capacity (for example 855 mAh/cm$^3$ for example 1 and 1066 mAh/cm$^3$ for example 2 *versus* 631 mAh/cm$^3$ for the counter-example). The capacity is increased thanks to the increase of the electrode density with 1.13 g/cm$^3$ for example 1, 1.44 g/cm$^3$ for example 2, 1.29 g/cm$^3$ for example 3 and 1.51 g/cm$^3$ for example 4 *versus* 0.81 g/cm$^3$ for the counter-example.

Carbon coating enables to still increase the reversible volumetric capacity up to 1140 $mAh/cm^3$.

In the meantime, the performances in terms of capacity retention remain very similar as shown in Figure 3.

References:

[1] Fukui et al., Appl. Mater Interfaces, 2010 Apr (4), 998-1008;

[2] Fukui et al., Journal of Power Sources, 196 (2011), 371-378;

[3] Fukui et al., Journal of Power Sources, 243 (2013), 152-158;

[4] Kaspar et al., Journal of Power Sources, 2012, 1-6.


## Claims

**1.** Use, as an electrode active material, of a particulate material comprising spherical silicon oxycarbide (SiOC) particles, said SiOC particles having:

- an average particle size ranging from 0.1 to 100 μm;
- a sphericity ranging from 0.95 to 1.0; and
- a total content in carbon (C), silicon (Si) and oxygen (O) equal or greater than 98 wt%, with Si ranging from 20 to 50 wt%, C from 10 to 50 wt% and O from 20 to 50 wt%.

**2.** The use according to claim 1, wherein said spherical SiOC particles have an average particle size ranging from 0.1 to 100 μm, in particular ranging from 0.5 μm to 40 μm, and more particularly from 1 to 20 μm.

**3.** The use according to any one of the preceding claims, wherein said spherical SiOC particles have a BET specific surface area ranging from 0.01 $m^2/g$ to 100 $m^2/g$, in particular from 0.01 $m^2/g$ to 50 $m^2/g$, preferably from 0.05 $m^2/g$ to 30 $m^2/g$ and more preferably from 0.05 to 10 $m^2/g$.

**4.** The use according to any one of the preceding claims, as an electrode active material for an anode electrode and more particularly for a lithium-ion battery.

**5.** The use according to any one of the preceding claims, wherein said spherical SiOC particles are obtained from spherical particles of at least one silicon-containing polymer, in particular from spherical polysilsesquioxane particles.

**6.** The use according to any one of the preceding claims, wherein said spherical SiOC particles are obtained by at least the following steps, in that order, of:

(i) providing spherical particles of at least one silicon-containing polymer, in particular spherical polysilsesquioxane particles;
(ii) pyrolysing the particulate material of step (i) to yield a SiOC material formed of aggregated spherical SiOC particles; and
(iii) processing the pyrolysis material obtained in step (ii) into a powder formed of the desired spherical SiOC particles.

**7.** The use according to claim 6, wherein the spherical silicon oxycarbide precursor particles of stage (i) are obtained by at least the following steps, in that order:

(a) forming a hydrolysate by adding a hydrolysable organoalkoxysilane to an aqueous acidic medium, in particular an acetic acid aqueous solution; and
(b) submitting said hydrolysate in an alkaline medium to a polycondensation reaction to obtain said spherical silicon oxycarbide precursor particles.

**8.** The use according to the preceding claim, wherein step (a) is performed by adding said organoalkoxysilane compound, preferably an organotrialkoxysilane compound, to an acidic aqueous medium, in particular to adjust the pH of the reaction medium to a value ranging from 3 to 6.

**9.** The use according to claim 7 or 8, wherein said organoalkoxysilane is an organotrialkoxysilane, in particular of formula (1) below

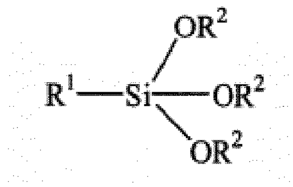

(1)

wherein $R^1$ and $R^2$ each independently represents a group selected from a substituted or unsubstituted $C_1$ to $C_{20}$ alkyl group, a substituted or unsubstituted aryl group, or a substituted or unsubstituted arylalkyl group,
in the $C_1$ to $C_{20}$ alkyl group, any hydrogen being optionally substituted with a halogen atom; and any $-CH_2-$ being optionally substituted with a group chosen from -O-, -CH=CH-, cycloalkylene, cycloalkenylene; and
in the alkylene of the substituted or unsubstituted arylalkyl group, any hydrogen being optionally substituted with a halogen atom; any $-CH_2-$ being optionally substituted with a group chosen from -O-, -CH=CH-, cycloalkylene or cycloalkenylene.

**10.** The use according to any one of claims 7 to 9, wherein step (b) is performed by adding an alkaline solution, in particular of ammonia water, to the hydrolysate solution obtained at the end of step (a), in particular to adjust the pH of the reaction medium to a value ranging from 7 to 12.

**11.** The use according to any one of claims 6 to 10, wherein the pyrolysis in step (ii) is performed by heating in an inert atmosphere the spherical silicon oxycarbide precursor particles at a rate ranging from 1°C/min to 30°C/min, in particular from 2°C/min to 10°C/min, to a temperature in the range of 600°C to 1,400°C, in particular of 900°C to 1,300°C, notably with the heating duration at final temperature ranging from 5 minutes to 10 hours, in particular from 30 minutes to 5 hours.

**12.** The use according to any one of the preceding claims, wherein said spherical SiOC particles are coated with an amorphous carbon layer.

**13.** A method for producing a particulate material comprising spherical silicon oxycarbide (SiOC) particles, comprising at least the steps, in that order, of:

(i) providing spherical particles of at least one silicon-containing polymer, in particular spherical polysilsesquioxane particles;
(ii) pyrolysing the particulate material of step (i) to yield a SiOC material formed of aggregated spherical SiOC particles;
said SiOC spherical particles having an average particle size ranging from 0.1 to 100 $\mu$m, a sphericity ranging from 0.95 to 1.0, and a total content in carbon (C), silicon (Si) and oxygen (O) equal or greater than 98 wt%, with Si ranging from 20 to 50 wt%, C from 10 to 50 wt% and O from 20 to 50 wt%;
(iii) processing the spherical SiOC particulate material of step (ii) into a powder form; and
(iv) forming an amorphous carbon coating on the surface of the spherical SiOC particles obtained in step (iii).

**14.** The method as claimed in the preceding claim, wherein steps (i) and/or (ii) is(are) as defined according to any one of claims 7 to 11.

**15.** The method according to 13 or 14, wherein the carbon coating is formed in step (iv) by:

- coating the spherical SiOC particles with at least one organic carbon precursor containing no silicon atoms and being able to be transformed into carbon during a pyrolysis process; and then
- pyrolysing said coated particles to obtain the carbon coating.

**16.** The method as claimed in the preceding claim, wherein said organic carbon precursor is chosen from poly(vinylidene

fluoride) (PVdF), sucrose, chlorinated polyethylene, polyvinyl chloride, polyethylene, phenolic resin, polyethylene oxide, and pitch, polyvinyl alcohol, polystyrene, carboxymethyl cellulose, alginic acid, oxalic acid including sodium or potassium salt, phenolic resin, polyvinyl fluoride, preferentially said organic carbon precursor being a polyvinyl alcohol or sucrose.

**17.** An electrode active material comprising at least a particulate material comprising spherical silicon oxycarbide (SiOC) particles as defined in any one of claims 1 to 12 and at least one conductive agent and/or at least one binder.

**18.** An electrode active material comprising at least a particulate material comprising spherical silicon oxycarbide (SiOC) particles as defined in claim 12 or as obtained according to the method defined in any one of claims 13 to 16.

**19.** An electrode comprising a particulate material comprising spherical silicon oxycarbide (SiOC) particles as defined in any one of claims 1 to 12 or as obtained according to the method defined in any one of claims 13 to 16, as electrochemically active material.

**20.** The electrode according to the preceding claim, which is an anode electrode, in particular for a lithium-ion battery.

**21.** A battery, comprising an electrode as defined in claim 19 or 20.

**22.** The battery according to the preceding claim, which is a lithium-ion battery, in particular a lithium-ion secondary battery.

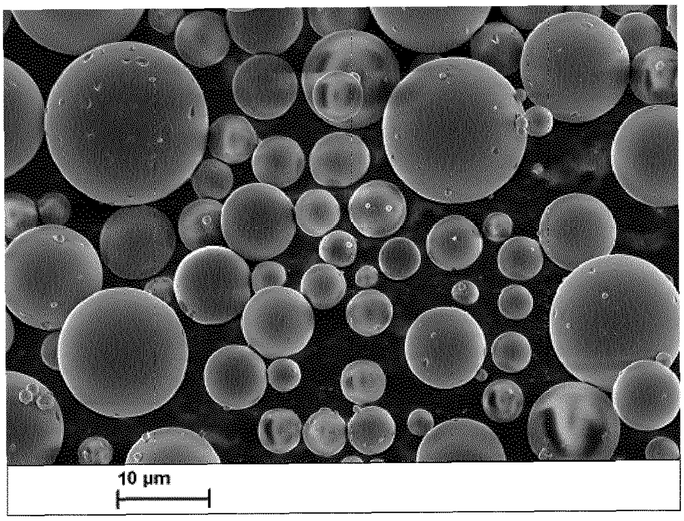


FIGURE 1

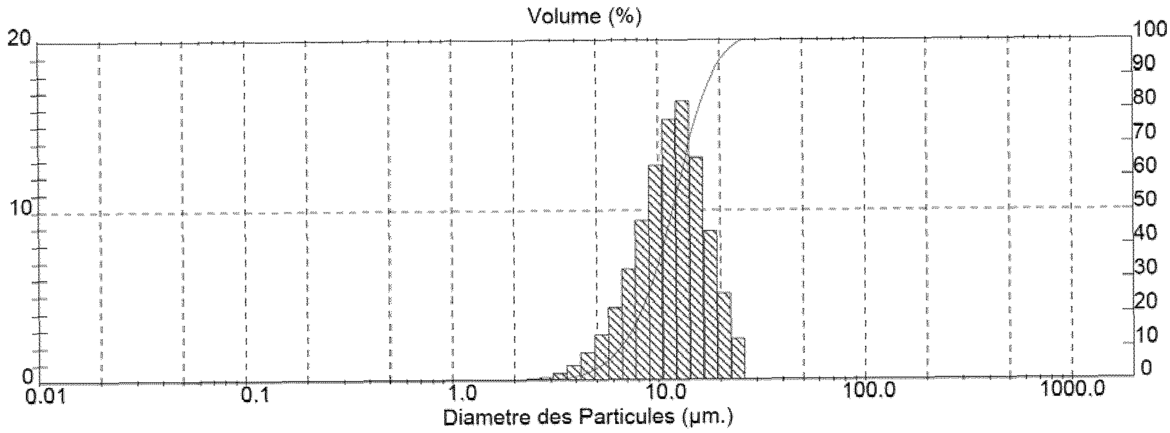


FIGURE 2

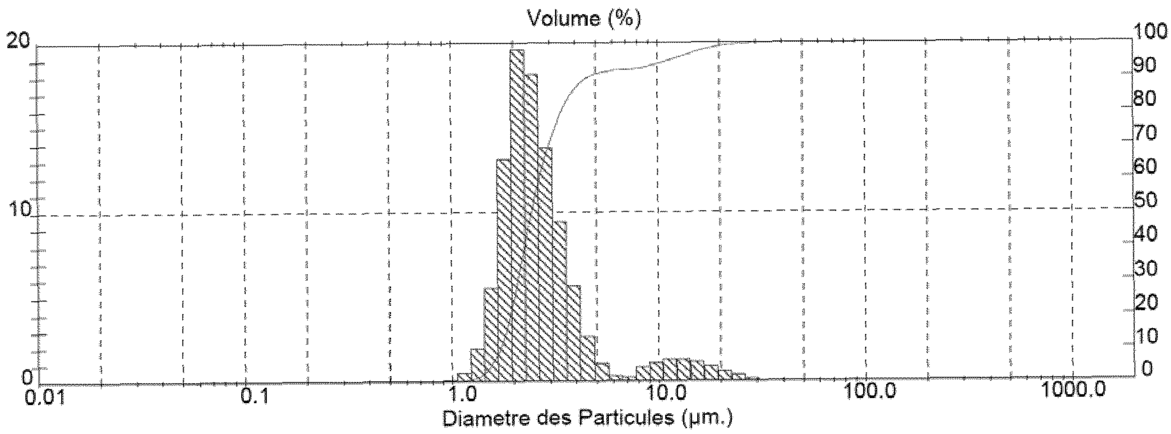


FIGURE 3

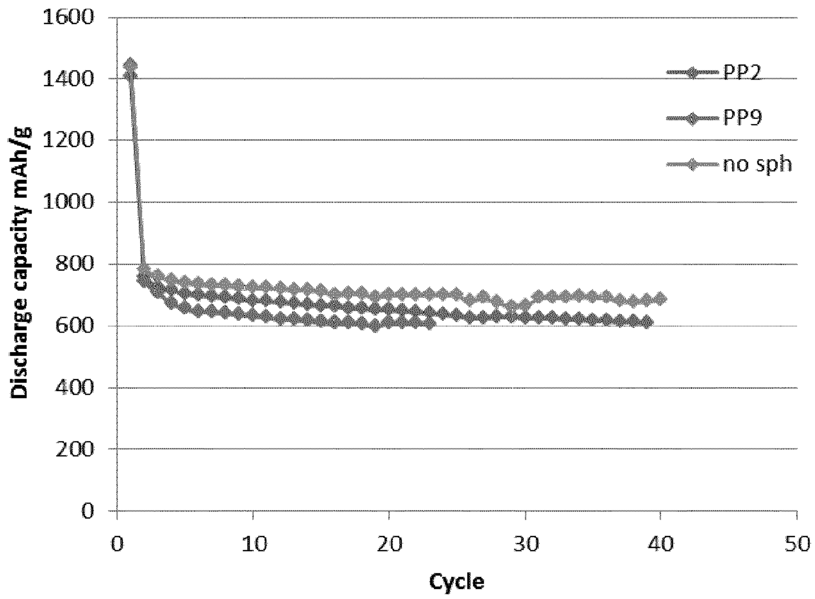


Figure 4a

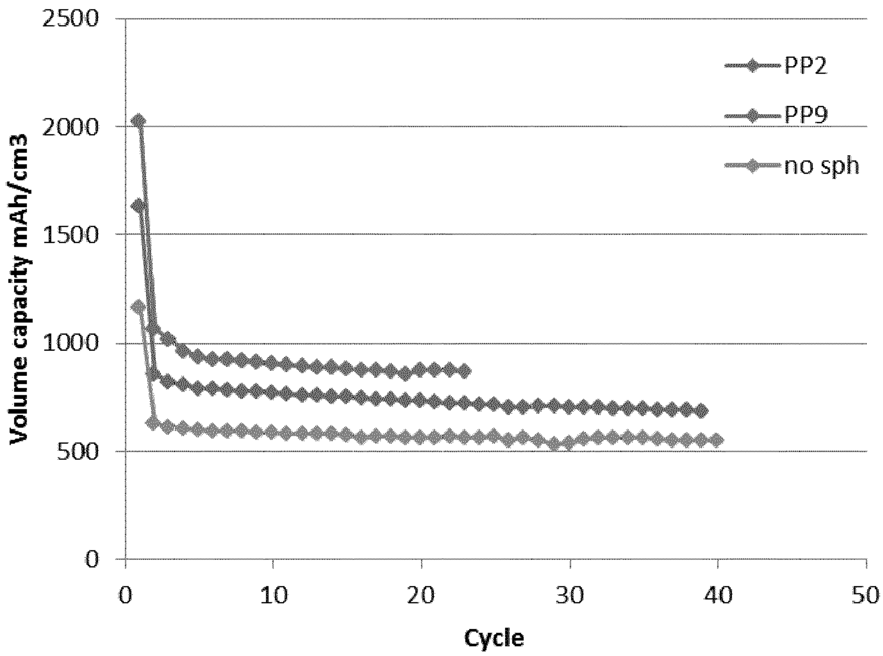


Figure 4b

FIGURE 4

Europäisches Patentamt
European Patent Office
Office européen des brevets

# EUROPEAN SEARCH REPORT

Application Number
EP 18 30 5965

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 018 099 A1 (COMMISSARIAT ENERGIE ATOMIQUE [FR]; JNC CORP [JP]) 11 May 2016 (2016-05-11) * claim 24; examples 1,5 * ----- | 1-22 | INV. C01B32/907 H01M4/136 H01M4/36 H01M4/58 H01M10/0525 |
| X | EP 2 869 367 A1 (JNC CORP [JP]; JNC PETROCHEMICAL CORP [JP]) 6 May 2015 (2015-05-06) * paragraph [0129]; claim 1; examples 1-5 * ----- | 1,4-6, 16-22 | |

TECHNICAL FIELDS SEARCHED (IPC)
C01B
H01M

The present search report has been drawn up for all claims

1

| Place of search | Date of completion of the search | Examiner |
|---|---|---|
| The Hague | 30 October 2018 | Mattheis, Chris |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 30 5965

This annex lists the patent family members relating to the patent documents cited in the above-mentioned European search report. The members are as contained in the European Patent Office EDP file on
The European Patent Office is in no way liable for these particulars which are merely given for the purpose of information.

30-10-2018

| Patent document cited in search report | Publication date | Patent family member(s) | Publication date |
|---|---|---|---|
| EP 3018099 A1 | 11-05-2016 | CN 107431196 A | 01-12-2017 |
| | | EP 3018099 A1 | 11-05-2016 |
| | | EP 3215460 A1 | 13-09-2017 |
| | | JP 2018502029 A | 25-01-2018 |
| | | KR 20170100497 A | 04-09-2017 |
| | | US 2017320744 A1 | 09-11-2017 |
| | | WO 2016071462 A1 | 12-05-2016 |
| EP 2869367 A1 | 06-05-2015 | CN 104412423 A | 11-03-2015 |
| | | CN 107256957 A | 17-10-2017 |
| | | EP 2869367 A1 | 06-05-2015 |
| | | JP 6183362 B2 | 23-08-2017 |
| | | JP WO2014002602 A1 | 30-05-2016 |
| | | KR 20150027236 A | 11-03-2015 |
| | | TW 201403929 A | 16-01-2014 |
| | | US 2015214548 A1 | 30-07-2015 |
| | | WO 2014002602 A1 | 03-01-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2104164 A
- EP 0867958 A, Dahn
- EP 3106433 A
- JP 2007112693 A


### Non-patent literature cited in the description


- **FUKUI et al.** *Appl. Mater Interfaces,* April 2010, vol. 4, 998-1008
- **FUKUI et al.** *Journal of Power Sources,* 2011, vol. 196, 371-378
- **FUKUI et al.** *Journal of Power Sources,* 2013, vol. 243, 152-158
- **KASPAR et al.** *Journal of Power Sources,* 2012, 1-6